**Europäisches Patentamt**

**European Patent Office**

**Office européen des brevets**

(19)

(11) Veröffentlichungsnummer: **0 175 137**
**B1**

(12)

# EUROPÄISCHE PATENTSCHRIFT

(45) Veröffentlichungstag der Patentschrift:
**11.05.88**

(51) Int. Cl.⁴: **B 65 H 59/38**

(21) Anmeldenummer: **85110073.5**

(22) Anmeldetag: **10.08.85**

(54) **Spuleinrichtung.**

(30) Priorität: **30.08.84 CH 4150/84**

(43) Veröffentlichungstag der Anmeldung:
**26.03.86 Patentblatt 86/13**

(45) Bekanntmachung des Hinweises auf die Patenterteilung:
**11.05.88 Patentblatt 88/19**

(84) Benannte Vertragsstaaten:
**AT DE FR GB IT**

(56) Entgegenhaltungen:
**FR - A - 1 144 798**
**FR - A - 1 176 203**
**FR - A - 2 386 469**

(73) Patentinhaber: **Huemer, Franz X., Sonnenuhrgasse 4,**
**A-1060 Wien (AT)**

(72) Erfinder: **Huemer, Franz X., Sonnenuhrgasse 4,**
**A-1060 Wien (AT)**

(74) Vertreter: **Petschner, Goetz, Patentanwaltsbüro G.**
**Petschner Seidengasse 18, CH-8001 Zürich (CH)**

ACTORUM AG

**Beschreibung**

Die nachfolgend beschriebene Erfindung betrifft eine Spuleinrichtung zum Aufspulen von faden-, band- oder drahtförmigem Material, wobei deren Spulenwelle drehfest eine Anker-Scheibe trägt, die mit einer, Permanentmagnete tragenden, drehfest auf der Welle des Antriebsmotors aufsitzenden Scheibe in magnetischer, regelbarer Mitnahmeverbindung steht, deren Regelung über eine Fadenspannungsregelvorrichtung mit einem, eine Tänzerrolle tragenden Tänzerarm erfolgt (FR-A-2 386 469).

Von Spuleinrichtungen der vorgenannten Art, etwa zum Aufspulen von Faden, Garn, Zwirn, Folienbändchen und dgl. wird verlangt, dass diese das gesamte angelieferte Material vollständig und ohne Verzug aufspulen. Da die Menge des zugelieferten Materials grossen Schwankungen ausgesetzt ist, was sich in einer Änderung der Fadenspannung äussert, wird bekanntermassen die Drehzahl der Aufwickelspule über eine Fadenspannungsregelvorrichtung nachgeregelt, wobei das Magnetfeld zwischen der motorisch angetriebenen Permanentmagnet-Scheibe und der spulenseitigen Anker-Scheibe verändert wird, wodurch eine mehr oder weniger starke Mitnahmeverbindung vom Motor zur Spule besteht.

Zur Änderung des Magnetfeldes zwischen der motorisch angetriebenen Permanentmagnet-Scheibe und der spulenseitigen Anker-Scheibe wurde bereits vorgeschlagen, die Spaltweite zwischen diesen zu ändern. Dies verlangt aber eine axial verschiebbare Lagerung entweder des Antriebsmotors oder der Spulenanordnung, was aufwendig und teuer ist (FR-A-1 144 798).

Weiter wurde eine Einrichtung der vorgenannten Art bekannt, bei der die beiden Scheiben in einem festen axialen Abstand voneinander angeordnet sind, wobei dann in den Axialspalt zwischen diesen eine Blende aus ferromagnetischem Material eingeschoben wird, wodurch eine Ablenkung bzw. Abschirmung eines Teiles des induzierten Magnetfeldes erfolgt (FR-A-2 386 469).

Eine solche Anordnung weist aber einen erheblichen Nachteil auf, indem die Blende relativ dick sein muss, um sich nicht unter der Wirkung der magnetischen Kraftfelder durchzubiegen. Das verlangt aber wiederum einen relativ breiten Luftspalt zwischen den Scheiben und das wiederum relativ grosse Permanentmagneten, um überhaupt ein dann ausreichendes Kraftfeld erzeugen zu können. Dies verteuert aber die ganze Anordnung nicht unerheblich.

Es ist somit Aufgabe der vorliegenden Erfindung, eine Spuleinrichtung der eingangs genannten Art zu schaffen, welche eine folgegenaue Regelung der Spulengeschwindigkeit in Abhängigkeit der Spannung des zugelieferten Materials bei geringstem Materialaufwand, insbesondere der Magnetmittel, unter Vermeidung der Nachteile des genannten Standes der Technik, gestattet.

Dies wird erfindungsgemäss dadurch erreicht, dass der Motor bzw. seine die Permanentmagnet-Scheibe tragende Welle relativ zur die Anker-Scheibe tragenden Spulenwelle radial verschiebbar oder verschwenkbar in Abhängigkeit der Schwenkbewegung des Tänzerarmes am Rahmen der Spuleinrichtung abgestützt ist.

Durch diese radiale Verschiebung der die Mitnahmeverbindung herstellenden Scheiben relativ zueinander wird nicht nur auf einfache Weise das induzierte Magnetfeld verändert, sondern es können zudem die beiden Scheiben mit geringstem Luftspalt zwischen sich angeordnet werden, was entsprechend kleine Permanentmagnete gestattet, um eine ausreichende magnetische Mitnahmeverbindung zwischen den beiden Scheiben sicherzustellen. Diese Anordnung ist somit nicht nur kostengünstig sondern auch absolut funktionssicher.

Für eine robuste Konstruktion besteht eine vorteilhafte Ausgestaltung der erfindungsgemässen Spuleinrichtung darin, dass der Motor um einen, zu seiner Welle achsenparallelen, am Rahmen der Spuleinrichtung drehbar abgestützten Zapfen schwenkbar ist, an welchem das freie Ende eines Schwenkhebels drehfest angreift, dessen anderes Ende mit dem freien Ende einer Verlängerung des Tänzerarmes gelenkig verbunden ist, wobei danan vorteilhaft vom Motor ein Lagerauge radial abragt, das drehfest auf dem Zapfen aufsitzt.

Um nun zusätzlich ein variables Übersetzungsverhältnis zwischen der Tänzerarmbewegung und der Verschiebung der die Mitnahmeverbindung herstellenden Scheiben zu ermöglichen, ist es von Vorteil, wenn die gelenkige Verbindung zwischen dem Schwenkhebel und der Tänzerarmverlängerung über eine verstellbare Verbindungsbleuel erfolgt, wobei es dann konstruktiv vorteilhaft ist, wenn die Verlängerung drehfest auf der, am Rahmen der Spuleinrichtung drehbar abgestützten Welle des Tänzerarmes aufsitzt.

Eine beispielsweise Ausführungsform des Erfindungsgegenstandes ist nachfolgend anhand der Zeichnung näher erläutert. Es zeigen:

Fig. 1 in schematischer Darstellung eine Seitenansicht, teilweise im Schnitt, der erfindungsgemässen Spuleinrichtung; und

Fig. 2 in schematischer Darstellung eine Frontansicht der Anordnung gemäss Fig. 1, wobei zum besseren Verständnis der Rahmenteil der Spuleinrichtung gemäss Fig. 1 weggelassen wurde.

Die dargestellte Spuleinrichtung umfasst einen Antriebsmotor 1, auf dessen Welle 2 eine Scheibe 4 aus geeignetem Material drehfest aufsitzt. Diese Scheibe 4 trägt an der äusseren Stirnseite randnah und im Abstand voneinander verteilt angeordnete, in der Regel stabförmige Permanentmagnete 15 mit wechselnder Polung.

Dieser Permanentmagnet-Scheibe 4 gegenüber ist, mit relativ geringem Radialspalt 40, eine sogenannte Anker-Scheibe 5 aus entsprechendem Material angeordnet, welche auf einer Spulenwelle 9 aufsitzt, die in geeigneter Weise drehbar am Rahmen 7 der Spuleinrichtung abgestützt ist. Auf dem freien Ende dieser Spulenwelle 9 ist eine Spule 10 zum Aufspulen faden-, band- oder drahtförmigem Material 12 drehfest aufsetzbar.

Wird bei dieser soweit bekannten Spuleinrichtung durch den Motor 1 die Permanentmagnet-Scheibe 4 in Rotation versetzt, wird ein Magnetfeld erzeugt, das in der Anker-Scheibe 5 einen Wirbelstrom bewirkt und diese in Drehrichtung mitnimmt, wodurch die Spule 10 angetrieben und das Material 12 aufgewickelt wird.

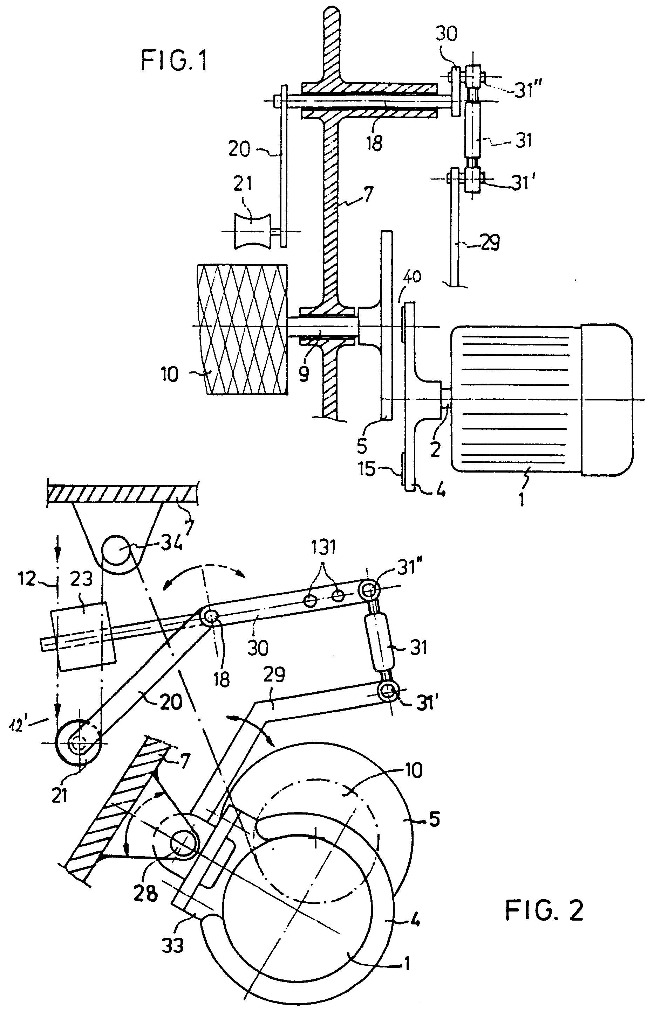

Um nun diese Mitnahmeverbindung in bekannter Weise durch eine Fadenspannungsregelvorrichtung beeinflussen zu können, wird das ankommende Material 12 unter Bildung einer Schlaufe 12' über eine sogenannte Tänzerrolle 21 geführt, deren Tänzerarm 20 mit seinem anderen Ende drehfest auf einer Welle 18 aufsitzt, die im genannten Rahmen 7 in geeigneter Weise drehbar gelagert ist. Diese Anordnung steht dabei unter der Wirkung einer Feder oder, wie gezeigt, eines Gegengewichtes 23. Wird hier dann mehr Material 12 angeliefert, sinkt also die Materialspannung, dann verschwenkt sich der Tänzerarm 20 in der Darstellung gemäss Fig. 2 im Gegenuhrzeigersinn; bei steigender Materialspannung 12 gegen die Wirkung des Gegengewichtes 23 im Uhrzeigersinn, wobei dessen Drehpunkt die Welle 18 ist.

Gemäss Fig. 2 läuft das Material 12 nach der Tänzerrolle 21 über eine Überlaufrolle 34 am Rahmen 7 auf die Spule 10 auf.

Zur Nachregelung der vorbeschriebenen magnetischen Mitnahmeverbindung zwischen Motor 1 und Spule 10 in Abhängigkeit des durch die Materialspannung bewegten Tänzerarmes 20 ist nun erfindungsgemäss der Motor 1 für eine radiale Verschiebung seiner Permanentmagnet-Scheibe 4 relativ zur Anker-Scheibe 5 der Spulenwelle 9 schwenkbar in Abhängigkeit der Schwenkbewegung des Tänzerarmes 20 am Rahmen 7 der Spuleinrichtung abgestützt. Diese Abstützung erfolgt über einen zur Motorwelle 2 achsenparallelen Zapfen 28, auf dem der Motor 1 mit einem Lagerauge 33, das radial vom Motorblock abragt, drehfest aufsitzt. Der Zapfen 28 ist dabei in geeigneter Weise drehbar am Rahmen 7 gelagert.

Für eine Folgebewegung des Motors 1 und damit der Permanentmagnet-Scheibe 4 relativ zur Anker-Scheibe 5 der Spulenwelle 9 in Abhängigkeit der Schwenkbewegung des Tänzerarmes 20 ist ein Hebelsystem vorgesehen, das einen Schwenkhebel 29 umfasst, der drehfest am Zapfen 28 des Motors 1 angreift. Das andere Ende dieses Schwenkhebels 29 ist über eine Verbindungsbleuel 31 mit dem einen Ende einer Verlängerung 30 gelenkig verbunden, welche Verlängerung 30 mit ihrem anderen Ende drehfest auf der, am Rahmen 7 der Spuleinrichtung drehbar abgestützten Welle 18 des Tänzerarmes 20 aufsitzt.

Auf diese Weise ist eine relativ einfache, funktionssichere Anordnung geschaffen, welche eine folgegenaue Relativverschiebung zwischen den beiden Magnetkopplungsscheiben 4 und 5 in Abhängigkeit der Schwenkbewegung des Tänzerarmes 20 gewährleistet.

Erfolgt dabei beispielsweise unter zunehmender Materialspannung ein Verschwenken des Tänzerarmes 20 im Uhrzeigersinn, folgt die Verlängerung 30 und der Schwenkhebel 29 dieser Bewegung, wodurch der Motor 1 ebenfalls im Uhrzeigersinn verschwenkt und so die Permanentmagnet-Scheibe 4 aus ihrer ursprünglich koaxialen Lage zur Anker-Scheibe 5 radial herausbewegt wird. Damit wird das wirksame Magnetfeld geschwächt und die Spule 10 läuft wunschgemäss langsamer um, bis die Materialspannung nachlässt und sich das Ganze zurückbewegt.

Selbstverständlich beschränkt sich der Erfindungsgedanke nicht nur auf die vorbeschriebene Ausführungsform, sondern es sind eine Reihe von konstruktiven Modifikationen ohne weiteres möglich.

Beispielsweise kann das Übersetzungsverhältnis zwischen Tänzerarm 20 und Schwenkhebel 29 dadurch variiert werden, dass man die Anlenkstifte 31' und/oder 31'' der Verbindungsbleuel 31 stufenweise versetzbar gestaltet, wie das an der Tänzerarmverlängerung 30 durch Lagerbohrungen 131 angedeutet ist. Weiter kann die relative radiale Verschiebbarkeit zwischen den beiden Scheiben auch durch eine Schlittenführung des Motors erreicht werden. Ferner kann der Tänzerarm bei geeigneter Anordnung auch direkt zur Verschwenkung bzw. Verschiebung des Motors herangezogen werden. Zudem kann die Anordnung so sein, dass sich zusätzliche, eine Gegenkraft am Tänzerarm erzeugende Gewichts- oder Federmittel erübrigen.

**Patentansprüche**

1. Spuleinrichtung zum Aufspulen von faden-, band- oder drahtförmigem Material, wobei deren Spulenwelle drehfest eine Anker-Scheibe trägt, die mit einer, Permanentmagnete tragenden, drehfest auf der Welle des Antriebsmotors aufsitzenden Scheibe in magnetischer, regelbarer Mitnahmeverbindung steht, deren Regelung über eine Fadenspannungsregelvorrichtung mit einem, eine Tänzerrolle tragenden Tänzerarm erfolgt, dadurch gekennzeichnet, dass der Motor (1) bzw. seine die Permanentmagnet-Scheibe (4) tragende Welle (2) relativ zur Anker-Scheibe (5) tragenden Spulenwelle (9) radial verschiebbar oder verschwenkbar in Abhängigkeit der Schwenkbewegung des Tänzerarmes (20) am Rahmen (7) der Spuleinrichtung abgestützt ist.

2. Spuleinrichtung nach Anspruch 1, dadurch gekennzeichnet, dass der Motor (1) für eine radiale Verschiebung seiner die Permanentmagnet-Scheibe (4) tragende Welle (2) um einen zu dieser achsenparallelen, am Rahmen (7) der Spuleinrichtung drehbar abgestützten Zapfen (28) schwenkbar ist, an welchem der Tänzerarm (20) direkt oder das freie Ende eines Schwenkhebels (29) drehfest angreift, dessen anderes Ende mit dem freien Ende einer Verlängerung (30) des Tänzeramrs (20) gelenkig verbunden ist.

3. Spuleinrichtung nach Anspruch 2, dadurch gekennzeichnet, dass die gelenkige Verbindung zwischen dem Schwenkhebel (29) und der Tänzerarmverlängerung (30) über eine verstellbare Verbindungsbleuel (31) erfolgt.

4. Spuleinrichtung nach Anspruch 2, dadurch gekennzeichnet, dass die Verlängerung (30) drehfest auf der, am Rahmen (7) der Spuleinrichtung drehbar abgestützten Welle (18) des Tänzerarmes (20) aufsitzt.

5. Spuleinrichtung nach Anspruch 2, dadurch gekennzeichnet, dass vom Motor (1) ein Lagerauge (33) radial abragt, das drehfest auf dem Zapfen (28) aufsitzt.

## Claims

1. Winding equipment for winding yarn, type or wire-shaped materials, with the bobbin shaft thereof carrying a rotatably fixed armature plate, which is in magnetic, adjustable driving connection with a plate carrying permanent magnets and mounted rotatably fixed on the shaft of the driving motor, the adjustment thereof resulting by a thread tension regulating device with a dancing arm carrying a dancing roller, characterized in that the motor (1) resp. the shaft (2) thereof carrying the permanent magnet plate (4) is supported relative to the bobbin shaft (9) carrying the armature plate (5) radially displaceable as a function of the rotating motion of the dancing arm (20) on the frame (7) of the winding equipment.

2. Winding equipment as in Claim 1, characterized in that the motor (1) is, for a radial displacement of its shaft (2) carrying the permanent magnet plate (4), rotatable axially parallel to its shaft around a rotatably supported pivot (28) on the frame (7) of the winding equipment, onto which pivot the dancing arm (20) directly, or the free end of a rocking lever (29), engages rotatably fixed, with the other end thereof being flexibly connected to the free end of an extension (30) of the dancing arm (20).

3. Winding equipment as in Claim 2, characterized in that the flexible connection between the rocking lever (29) and the extension of the dancing arm (30) results from an adjustable connected rod (31).

4. Winding equipment as in Claim 2, characterized in that the extension (30) is mounted rotatably fixed on the shaft (18) of the dancing arm (20) supported rotatable on the frame (7) of the winding equipment.

5. Winding equipment as in Claim 2, characterized in that a bearing eye (33) mounted rotatably fixed on the pivot (28) extends radially from the motor (1).

## Revendications

1. Dispositif de bobinage d'un matériau se présentant sous la forme d'un fil, d'un ruban ou d'un fil métallique, dont l'arbre de bobine porte fixe en rotation un disque-palette qui est en liaison d'entraînement réglable, magnétique, avec un disque portant des aimants permanents, monté fixe en rotation sur l'arbre du moteur d'entraînement, dont le réglage est assuré par un dispositif de réglage de la tension du fil comportant un bras compensateur portant un rouleau compensateur, caractérisé en ce que le moteur (1) ou son arbre (2) portant le disque (4) à aimants permanents prend appui sur le châssis (7) du dispositif de bobinage, de manière à se déplacer radialement ou à pivoter par rapport à l'arbre de bobine (9) portant le disque-palette (5), en fonction du pivotement du bras compensateur (20).

2. Dispositif de bobinage selon la revendication 1, caractérisé en ce que le moteur (1) peut pivoter autour d'un pivot (28), parallèle à l'axe de l'arbre (2) prenant appui sur le châssis (7) du dispositif de bobinage de manière à pouvoir tourner, pour un déplacement radial de l'arbre (2) portant le disque (4) à aimants permanents, les bras compensateur (20) directement, ou l'extrémité libre d'un levier de pivotement (29) agissant directement sur le pivot (28), l'autre extrémité du levier de pivotement (29) étant reliée articulée à l'extrémité libre d'un prolongement (30) du bras compensateur (20).

3. Dispositif de bobinage selon la revendication 2, caractérisé en ce que l'assemblage articulé du levier de pivotement (29) et du prolongement (30) du bras compensateur est réalisé par une pièce d'assemblage (31) réglable.

4. Dispositif de bobinage selon la revendication 2, caractérisé en ce que le prolongement (30) est calé fixé en rotation sur l'arbre (18), monté en rotation sur le châssis (7) du dispositif de bobinage, du bras compensateur (20).

5. Dispositif de bobinage selon la revendication 2, caractérisé en ce qu'un oeillet de palier (33), monté fixe en rotation sur le pivot (28) fait saillie du moteur (1).

FIG.1

FIG. 2